# EUROPEAN PATENT APPLICATION

(11) **EP 3 403 965 A1**
(43) Date of publication of application: **21.11.2018**
(21) Application number: 18172168.9
(22) Date of filing: 14.05.2018
(51) Int. Cl.: B66B 1/24, B66B 1/46, B66B 3/00

(54) **DESTINATION ENTRY USING BUILDING FLOOR PLAN**

(30) Priority: 15.05.2017 US 201715595177
(71) Applicant: Otis Elevator Company, Farmington, Connecticut 06032 (US)
(72) Inventor: ARMISTEAD, Jason R., Farmington, CT Connecticut 06032 (US)
(74) Representative: Schmitt-Nilson Schraud Waibel Wohlfrom Patentanwälte Partnerschaft mbB

(57) **Abstract**

Methods and systems for making elevator service requests in a building (529). The method including obtaining a floor plan (550) for the building and overlaying a measurement system (551) of suitable scale onto the floor plan. The method also includes identifying relevant features and their location in the floor plan based on the measurement system, determining a pathway from a user device (531) to a target area (556) in the vicinity of an elevator door based on the relevant features, and computing a travel duration from the user device to the target area. Finally, the method includes assigning an elevator car (503) to a user based on a user service request at the user device and the travel duration.

## Description

The subject matter disclosed herein generally relates to elevator service requests for elevators and, more particularly, to elevator service requests using destination entry fixtures and user mobile devices.

Elevator systems can receive input from users through mechanical, electrical, and/or electromechanical devices located within or as part of the elevator system. That is, requests for elevator service are typically made by potential passengers when the passenger is already located at an elevator landing. However, having a remote mechanism to make such requests may be advantageous. For example, the use of personal user devices can enable remote elevator service requests, thus improving user experience and/or enabling improved elevator management within a building.

Passengers using elevators can generally give calls to elevators either in an elevator car and/or in an elevator lobby. Elevator lobbies are typically provided with up/down pushbuttons, by means of which a passenger can order an elevator to the call floor and simultaneously indicate his/her travel direction. After the elevator has arrived at the call-entry floor, the passenger moves into the elevator car and indicates his/her destination floor with the pushbuttons of the car panel in the elevator car.

In some systems a fixture is employed in the elevator lobby or at a front desk, turnstile and the like for a user to enter his destination request. Further, in some systems a user may have a mobile application to submit a destination request. In this way the elevator system identifies to the user, in response to a destination call, the elevator allocated to him/her. To improve the call entry of an elevator system with a mobile device, one approach used has been to present the user making a destination call, a convenient way of selecting a departure floor and destination floor. For example some systems, a departure floor-destination floor pair may be selected by the user on the basis of a touch detected with the touch-sensitive display. Selection of both the departure floor and the destination floor can thus be performed with one selection, and even with just one touch. In either instance, once a user has made a destination request, the control system of the elevator system allocates the optimal elevator for the use of the passenger and transmits information about this to the call-entry device. One way that the control system optimizes allocation of elevator cars to passengers is to estimate the time it will take the user to actually arrive at the assigned elevator car so that waiting in front of the assigned car is reduced or minimized. Reducing wait time improves elevator traffic flow and enhances user experience.

To estimate the time it takes for a user to arrive at an assigned elevator several factors are considered, including, but not limited to the distance to the assigned car, obstacles and traffic patterns in the building. When configuring a destination entry system, the locations of each destination entry fixture are typically stored as a floor number, plus a distance and direction relative to each elevator in a group. However, a group of eight elevators requires approximately seventeen pieces of data to be entered for each destination entry fixture. Preprogramming by the factory can improve on the time expended and potential mistakes, but is time consuming. Moreover, current commissioning techniques do not support mobile destination entry devices or mobile user devices or other applications.

According to one embodiment, described herein is a method and systems for making elevator service requests in a building. The method including obtaining a floor plan for the building and overlaying a measurement system of suitable scale onto the floor plan. The method also includes identifying relevant features and their location in the floor plan based on the measurement system, determining a pathway from a user device to a target area in the vicinity of an elevator door based on the relevant features, and computing a travel duration from the user device to the target area. Finally, the method includes assigning an elevator car to a user based on a user service request at the user device and the travel duration.

Particular embodiments may include any of the following optional features, alone or in combination:
In addition to one or more of the features described above, or as alternatives, further embodiments of the methods may include that the floor plan includes at least one of a drawing, a design model, CAD drawings and a plan based on measurements.

In addition to one or more of the features described above, or as alternatives, further embodiments of the methods may include that the measurement system includes a grid overlay.

In addition to one or more of the features described herein, or as alternatives, further embodiments of the methods may include a coordinate system on the grid overlay.
In addition to one or more of the features described herein, or as alternatives, further embodiments of the methods may include the coordinate system is at least one of a Cartesian coordinate system and a polar coordinate system.

In addition to one or more of the features described herein, or as alternatives, further embodiments of the methods may include that the suitable scale for the grid overlay is at least one of: at least one meter per unit of the grid; at least 50 centimeters per unit of the grid; at least 10 centimeters per unit of the grid.

In addition to one or more of the features described herein, or as alternatives, further embodiments of the methods may include that the relevant features include at least one of the user device, the elevator, the target area in the vicinity of the elevator, and any obstacles.

In addition to one or more of the features described herein, or as alternatives, further embodiments of the methods may include that the user device is at least one of a fixture, a kiosk, a turnstile, and a user's mobile device.

In addition to one or more of the features described herein, or as alternatives, further embodiments of the methods may include that the target area is at least one of a point in front of and substantially at a center of a car door of the elevator and a point in the vicinity of the elevator.

In addition to one or more of the features described herein, or as alternatives, further embodiments of the methods may include that the obstacles include at least one of: any feature in the building that could impede a user traversing a pathway to the target area; a shaft for the elevator, any building structure.

In addition to one or more of the features described herein, or as alternatives, further embodiments of the methods may include that the obstacles are defined as regions on a coordinate system.

In addition to one or more of the features described herein, or as alternatives, further embodiments of the methods may include that the pathway is a computed distance from the user device to the target area avoiding any obstacles.

In addition to one or more of the features described herein, or as alternatives, further embodiments of the methods may include that the computed distance is based on at least one of: straight pathways with right angle turns only, a shortest distance including straight pathway segments only, and a shortest distance including at least one curved pathway segment.

In addition to one or more of the features described herein, or as alternatives, further embodiments of the methods may include that the duration is an estimated time for the user to traverse the computed distance.

In addition to one or more of the features described herein, or as alternatives, further embodiments of the methods may include that the duration is an estimated time for the user to traverse the distance from the user device to the target area.

In addition to one or more of the features described herein, or as alternatives, further embodiments of the methods may include transmitting to a user device at least one of the floor plan, a simplified floor plan or directions regarding a pathway to a target area.

In addition to one or more of the features described herein, or as alternatives, further embodiments of the methods may include obtaining a second floor plan for a second for in the building, overlaying a second grid of suitable scale onto the second floor plan, identifying relevant features and their location on the second floor on the second grid overlay in the second floor plan, and determining a pathway from a second user device on the second floor to a target area in the vicinity of an elevator door on the second floor. The method may also include computing a travel duration from the second user device to the target area on the second floor and assigning an elevator car to a user based on a user service request at the second user device and the travel duration.

In addition to one or more of the features described herein, or as alternatives, further embodiments of the methods may include at least one of transmitting the floor plan to at least the user device and storing the floor plan or a portion thereof in the user device

Also described herein in another embodiment is an elevator system for making elevator service requests. The elevator system including at least one processor, a display; and memory having instructions stored thereon that, when executed by the at least one processor, cause the elevator system to obtain a floor plan for the building, overlay a measurement system of suitable scale onto the floor plan, identify relevant features and their location in the floor plan based on the measurement system, and determine a pathway from a user device to a target area in the vicinity of an elevator door based on the relevant features. In addition the processor may cause the elevator system to compute a travel duration from the user device to the target area, and assign an elevator car to a user based on a user service request at the user device and the travel duration.

Particular embodiments may include any of the following optional features, alone or in combination:
In addition to one or more of the features described herein, or as alternatives, further embodiments of the methods may include that the user device is at least one of a fixture, a kiosk, a turnstile, and a user's mobile device.

In addition to one or more of the features described herein, or as alternatives, further embodiments of the methods may include that the relevant features include at least one of the user device, the elevator, the target area in the vicinity of the elevator, and any obstacles.

Technical effects of embodiments of the present disclosure include user devices and methods of operation for simplified destination entry system commissioning and improved system performance.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

The present disclosure is illustrated by way of example and not limited in the accompanying figures in which like reference numerals indicate similar elements.
FIG. 1 is a schematic illustration of an exemplary elevator system that may employ various embodiments of the present disclosure;
FIG. 2 is a schematic block diagram illustrating a system that may be configured in accordance with one or more embodiments of the present disclosure;
FIG. 3 is a schematic illustration of a system in accordance with an embodiment of the present disclosure;
FIG. 4A is a schematic illustration of a computing system of a user device in accordance with an embodiment of the present disclosure;
FIG. 4B is a schematic illustration of a computing system of an elevator controller in accordance with an embodiment of the present disclosure;
FIG. 5A is a simplified illustration of a building floor plan at the lobby in accordance with a described embodiment;
FIG. 5B is a simplified illustration of a building floor plan at a low-rise level in accordance with a described embodiment;
FIG. 5C is a simplified illustration of a building floor plan at a mid-rise level in accordance with a described embodiment;
FIG. 5D is a simplified illustration of a building floor plan at a high-rise level in accordance with a described embodiment;
FIG. 6 is a simplified illustration of a building floor plan at the lobby with a grid overlay in accordance with a described embodiment;
FIG. 7 is a simplified illustration of a building floor plan at the lobby depicting features and pathways in accordance with a described embodiment;
FIG. 8 is a simplified illustration of a building floor plan with a mobile user device and pathways in accordance with a described embodiment; and
FIG. 9 illustrates a flow process for making elevator service requests in accordance with an embodiment of the present disclosure.

In general the embodiment described herein relate to methods and systems for making elevator service requests, and improving the commissioning of a destination entry system. The methods include obtaining a floor plan for a building, overlaying a grid of selected resolution on the floor plan, identifying relevant physical features including the positions of the destination entry fixtures, each elevator of the group of elevators and any obstacles. The method also includes determining a distance to each elevator in a group and estimating a time associated with traversing the respective distance to a selected elevator car. The embodiments may also include receiving a user input indicating a new elevator service request related to one of the groups, and transmitting the elevator service request to an elevator controller.

For the purposes of promoting an understanding of the principles of the present disclosure, reference will now be made to the embodiments illustrated in the drawings, and specific language will be used to describe the same. It will nevertheless be understood that no limitation of the scope of this disclosure is thereby intended. The following description is merely illustrative in nature and is not intended to limit the present disclosure, its application or uses. It should be understood that throughout the drawings, corresponding reference numerals indicate like or corresponding parts and features. As used herein, the term controller refers to processing circuitry that may include an application specific integrated circuit (ASIC), an electronic circuit, an electronic processor (shared, dedicated, or group) and memory that executes one or more software or firmware programs, a combinational logic circuit, and/or other suitable interfaces and components that provide the described functionality.

Additionally, the term "exemplary" is used herein to mean "serving as an example, instance or illustration." Any embodiment or design described herein as "exemplary" is not necessarily to be construed as preferred or advantageous over other embodiments or designs. The terms "at least one" and "one or more" are understood to include any integer number greater than or equal to one, i.e. one, two, three, four, etc. The terms "a plurality" are understood to include any integer number greater than or equal to two, i.e. two, three, four, five, etc. The term "connection" can include an indirect "connection" and a direct "connection".

As shown and described herein, various features of the disclosure will be presented. Various embodiments may have the same or similar features and thus the same or similar features may be labeled with the same reference numeral, but preceded by a different first number indicating the figure to which the feature is shown. Thus, for example, element "a" that is shown in FIG. X may be labeled "Xa" and a similar feature in FIG. Z may be labeled "Za." Although similar reference numbers may be used in a generic sense, various embodiments will be described and various features may include changes, alterations, modifications, etc. as will be appreciated by those of skill in the art, whether explicitly described or otherwise would be appreciated by those of skill in the art.

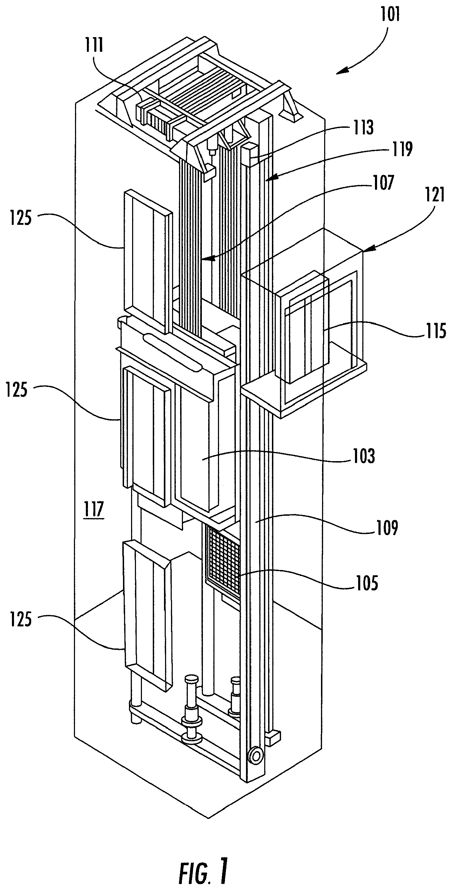

FIG. 1 is a perspective view of an elevator system 101 including an elevator car 103, a counterweight 105, a roping 107, a guide rail 109, a machine 111, a position encoder 113, and a controller 115. The elevator car 103 and counterweight 105 are connected to each other by the ropes 107. The ropes 107 may include or be configured as, for example, ropes, steel cables, and/or coated-steel belts and the like. The counterweight 105 is configured to counterbalance a load of the elevator car 103 and to ensure there is sufficient traction on the driving sheave of the elevator hoisting machine 111. The counterweight is configured to facilitate movement of the elevator car 103 concurrently and in an opposite direction with respect to the counterweight 105 within an elevator shaft 117 and along the guide rail 109.

The roping 107 engages the machine 111, which is part of an overhead structure of the elevator system 101. The elevator machine 111 is typically placed overhead, but in some installations may be places at the side or bottom of the elevator shaft 117. The machine 111 is configured to control movement between the elevator car 103 and the counterweight 105. The position encoder 113 may be mounted on an upper sheave of a speed-governor system 119 and may be configured to provide position signals related to a position of the elevator car 103 within the elevator shaft 117. In other embodiments, the position encoder 113 may be directly mounted to a moving component of the machine 111, or may be located in other positions and/or configurations as known in the art.

The controller 115 is located, as shown, in a controller room 121 of the elevator shaft 117 and is configured to control the operation of the elevator system 101, and particularly the elevator car 103. For example, the controller 115 may provide drive signals to the machine 111 to control the acceleration, deceleration, leveling, stopping, etc. of the elevator car 103. The controller 115 may also be configured to receive position signals from the position encoder 113. When moving up or down within the elevator shaft 117 along guide rail 109, the elevator car 103 may stop at one or more landings 125 as controlled by the controller 115. In addition, the elevator system 101 may include a group controller (not shown, e.g., supervisory system, dispatcher, etc.) which may be, but is not necessarily, a separate physical (and logical) controller. In the case of destination dispatch systems, some systems (typically with several elevator cars 103, in multiple elevator shafts 117) include a separate controller that provides the elevator group's destination entry dispatching capability (often in a redundant configuration). So while the group controller may be the one device determining which passenger calls are assigned to each elevator car 103, it may not (typically) perform the functions associated with controlling the movement of the elevator car 103, e.g., motor control, braking, monitoring safety devices, etc. The group controller might, or might not, (based on the particular implementation) decide in which order the assigned calls should be answered by each elevator car during automatic "in group" operation. In some designs, it might be possible that the group supervisory/dispatching function (either in whole, or in part) is distributed amongst the elevator car controllers 115, e.g. as a "flying role" where one elevator car controller is somehow selected to take on the additional role(s). Although shown in a controller room 121, those of skill in the art will appreciate that the controller 115 and/or a group controller can be located and/or configured in other locations or positions within the elevator system 101.

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor.

Although shown and described with a roping system, elevator systems 101 that employ other methods and mechanisms of moving an elevator car 103 within an elevator shaft 117, including ropeless elevator systems and/or elevator systems with more than one elevator car in each elevator shaft, may employ embodiments of the present disclosure. FIG. 1 is merely a non-limiting example presented for illustrative and explanatory purposes. It should be appreciated that any elevator system 101 or system configuration may be employed.

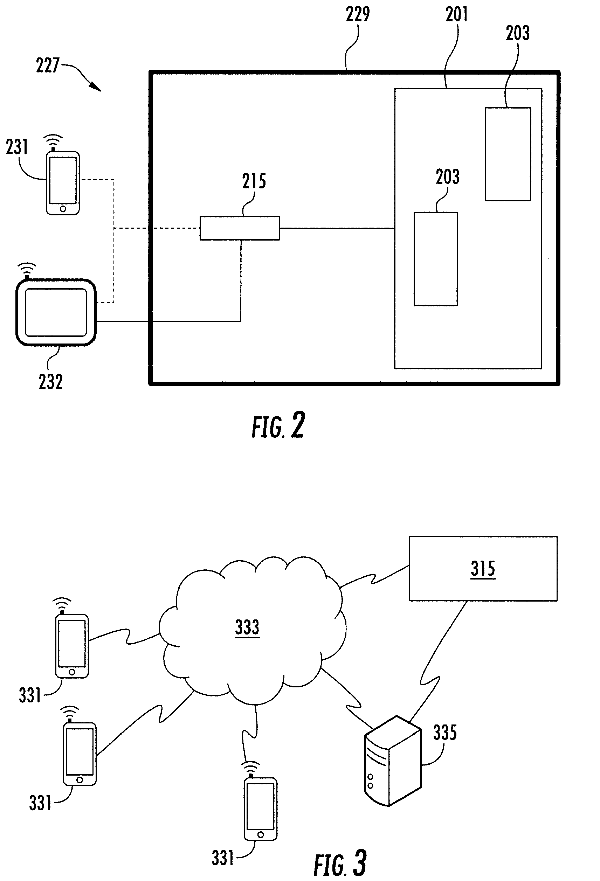

Turning now to FIG. 2, a schematic illustration of a building system 227 in an example embodiment of the present disclosure is shown. The building system 227 includes an elevator system 201 installed within a structure 229 (e.g., a building). In some embodiments, the structure 229 may be an office building or a collection of office buildings that may or may not be physically located near each other. The structure 229 may include any number of floors that are accessible by the elevator system 201 and thus the structure 229 can include any number of landings (e.g., as shown in FIG. 1). Persons entering the structure 229 may enter at a lobby floor or any other desired floor and may travel to a destination floor via one or more elevator cars 203 that are part of the elevator system 201.

The elevator system 201 may include one or more computing devices, such as an elevator controller 215. The elevator controller 215 may be configured to control dispatching operations for one or more elevator cars 203 associated with the elevator system 201. It is understood that the elevator system 201 may utilize more than one elevator controller 215, and that each elevator controller may control a group of elevators cars 203. Although two elevator cars 203 are shown in FIG. 2, those of skill in the art will appreciate that any number of elevators cars may be employed in the elevator and building systems that employ embodiments of the present disclosure. The elevator cars 203 can be located in the same hoistway or in different hoistways so as to allow coordination amongst elevator cars 201 in different elevator banks serving different floors (e.g., sky lobbies, etc.). It is understood that the elevator system 201 may include various features as described above with reference to FIG. 1 and may also include other non-depicted elements and/or features as known in the art (e.g., drive, counterweight, safeties, etc.). Moreover, the elevators may be employed in any configuration with all elevators serving all floors of the building, some elevators only serving certain floors, a first group of elevator serving lower floors of a building and a sky lobby and a second group of elevators serving the sky lobby and upper floors of the building, etc.

Also shown in FIG. 2 are user devices 231, 232 such as a fixed or movable kiosk or a mobile device (e.g., smart phone, smart watch, wearable technology, laptop, tablet, etc.). The user device 231, 232 can include several types of devices, in one instance, a fixed device, e.g. a keypad/touch screen affixed to a wall in a building corridor/lobby, a mobile kiosk 232, and a user-owned device 231 such a smartphone. It should be appreciated that the first two are typically part of the building's elevator system 101 infrastructure, while the third is typically owned and used by the passenger themselves. The term "user device" 231, 232 is used to denote all of these types of devices as may be employed by the user for the purposes of making some form of destination request. It should be appreciated that in some instances user devices 231, 232 are proximate to the elevator system 101, for example in the middle of a bank of elevators, in others they are mobile.

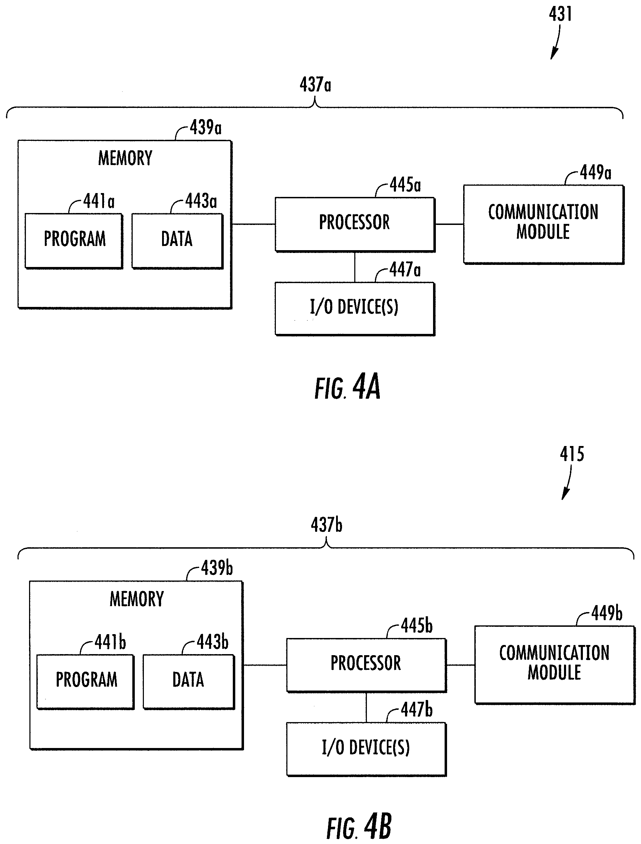

The user device 231, 232 may include a mobile and/or personal device that is typically carried by a person, such as a phone, PDA, etc. The user device 231 may include a processor, memory, and communication module(s), as shown in FIG. 4A. As described below, the processor can be any type or combination of computer processors, such as a microprocessor, microcontroller, digital signal processor, application specific integrated circuit, programmable logic device, and/or field programmable gate array. The memory can be a non-transitory computer readable storage medium tangibly embodied in the user device 231, 232 including executable instructions stored therein, for instance, as firmware. The communication module may implement one or more communication protocols as described in further detail herein, and may include features to enable wired or wireless communication with external and/or remote devices separate from the user device 231, 232. The user device 231, 232 may further include a user interface (e.g., a display screen, a microphone, speakers, input elements such as a keyboard or touch screen, etc.) as known in the art.

The elevator controller 215 may include a processor, memory, and a communication module as shown in FIG. 4B. Similar to the user device 231, 232 the processor memory, and communication module may be implemented as described above, but as part of the elevator system 201.

A user device and an elevator controller in accordance with embodiments of the present disclosure can communicate with one another, e.g., as shown in FIG. 3. For example, one or more user device 331 and the elevator controller 315 may communicate with one another when proximate to one another (e.g., within a threshold distance). The user device 331 and the elevator controller 315 may communicate over a network 333, that may be wired or wireless. Wireless communication networks can include, but are not limited to, Wi-Fi, short-range radio (e.g., Bluetooth®), near-field infrared, cellular network, etc. In some embodiments, the elevator controller 315 may include, or be associated with (e.g., communicatively coupled to) one or more networked building elements 335, such as computers, kiosks, beacons, hall call fixtures, lanterns, bridges, routers, network nodes, etc. The networked element 335 may also communicate directly or indirectly with the user devices 331 using one or more communication protocols or standards (e.g., through the network 333).

For example, the networked element 335 may communicate with the user devices 331 using near-field communications (NFC) (e.g., network 333) and thus enable communication between the user devices 331 and the elevator controller 315. The network 333 may be any type of known communication network including, but not limited to, a wide area network (WAN), a local area network (LAN), a global network (e.g. Internet), a virtual private network (VPN), a cloud network, and an intranet. The network 333 may be implemented using a wireless network or any kind of physical network implementation known in the art. The user devices 331 and/or the networked devices 335 may be coupled to the elevator controller 315 through multiple networks 333 (e.g., cellular and Internet) so that not all user devices 331 and/or the networked devices 335 are coupled to the elevator controller 315 through the same network 333. One or more of the user devices 331 and the elevator controller 315 may be connected to the network 333 in a wireless fashion. In one non-limiting embodiment, the network 333 is the Internet and one or more of the user devices 331 execute a user interface application (e.g. a web browser, mobile app) to contact the elevator controller 315 through the network 333.

In some embodiments, the elevator controller 315 may establish communication with one or more user devices 331 that are outside of the structure/building. In such instances the elevator controller may take advantage of other technologies including GPS, triangulation, or signal strength detection, by way of non-limiting example to determine the location of the user and user device 331. Such technologies that allow communication can provide users and the system(s) described herein more time to perform the described functions. In example embodiments, the user devices 331 communicate with the elevator controller 315 over multiple independent wired and/or wireless networks. Embodiments are intended to cover a wide variety of types of communication between the user devices 331 and the elevator controller 315, and embodiments are not limited to the examples provided in this disclosure.

Embodiments provided herein are directed to apparatuses, systems, and methods for making and fulfilling requests for elevator service. In some embodiments, a request for elevator service may be communicated over one or more lines, connections, or networks, such as network 333, e.g., a request made by a user device 331 and transmitted through the network 333 to the elevator controller 315 to request elevator service. The request for service may be initiated by a mobile device controlled by and/or associated with a user, in a passive or active manner.

In some embodiments, the mobile device may be operative in conjunction with a Transmission Control Protocol (TCP) and/or a User Datagram Protocol (UDP). In some embodiments, user may be authenticated or validated based on a set of credentials for a user/user device. In some embodiments, a request for service may be fulfilled in accordance with the location of the user device and/or one or more profiles, such as one or more user or mobile device profiles. In some embodiments the profiles may be registered as part of a registration process. In some embodiments, an elevator system may be registered with a service provider.

As noted, the elevator controller 315 may be associated with an elevator system (e.g., elevator systems 101, 201). The elevator controller 315 may be used to process or fulfill the requests for elevator service that are submitted from one or more user devices 331. The requests for elevator service may be received through the network 333 from the one or more user devices 331 and/or the networked building elements 335, which may be mobile devices, including, but not limited to phones, laptops, tablets, smartwatches, etc. One or more of the user devices 331 may be associated with (e.g., owned by) a particular user. Once authenticated or validated, the user may use his/her user device(s) 331 to request elevator service.

For example, a user of a user device 331 may request service in an affirmative or active manner. The user may enter a request for elevator service using an I/O interface of the user device 331, as described herein. That is, in some embodiments, an application, app, or other program may be installed and operated on the user device 331 wherein the user may interact with the app or program to request elevator service.

In other embodiments, or in combination therewith, the user may request elevator service in a passive manner. For example, a profile may be established for the user or the particular user device 331, optionally as part of a registration process with, e.g., a service provider and/or through historical data tracking. The profile may contain a log of the user's history and/or activities, such as where the user has gone or traveled to, the user's preferences, or any other data that may be applicable to the user. In some embodiments, the user profile may be accessed or analyzed to determine the likelihood or probability that the user will request elevator service at a particular moment in time (e.g., a particular day or time of day).

Resources may be provisioned or allocated to fulfill the request (e.g., an elevator car call or reservation may be placed) in the event that the probability of requested service, or consumption, or use of an elevator is anticipated.

The request for service may be conveyed or transmitted from the user device 331 through the network 333. For example, the request for service may be transmitted to and/or over the Internet and/or a cellular network. The network(s) 333 may include infrastructure that may be organized to facilitate cloud computing. For example, one or more servers may be employed as part of the network 333.

In some embodiments, the request for service may specify a type of service requested, at any level of detail or abstraction. For example, a first request for service may specify that elevator service is requested, a second request for service may specify one or more of a departure floor and/or a destination floor, and a third request for service may specify that elevator service is desired to accommodate a heavy load (e.g., freight or cargo) with a number of other users or passengers in an amount less than a threshold. In other words, it should be appreciated that in some embodiments, a request for service is more than merely a call request (as in the case of a hall button system where no destination is entered). In some instances it could also be a request with a source (implied by fixture location) and a destination (where the user wants to go). Moreover, there could be additional request-relevant information, e.g. VIP, or other information with different call types, including number of passengers and/or a passenger ID. In some embodiments, the request for service transmitted from the user device 331 may include an identifier associated with the user or the particular user device 331 in order to allow the elevator controller 315 to distinguish between users and/or user devices 331.

Referring now to FIGS. 4A-4B, schematic block diagram illustrations of example computing systems 437a, 437b for a user device 431 and an elevator controller 415, group controller and the like, are shown. The computing system 437a may be representative of computing elements or components of user devices, networked elements, mobile devices, etc. as employed in embodiments of the present disclosure. The computing system 437b may be representative of computing elements or components of controllers, elevator controller, group controllers, networked elements, computers, etc. For example, the computing system 437a can be configured as part of a user device 431, e.g., user device 231, 232, 331 shown above. The computing system 437a can be configured to operate the user device 431, including, but not limited to, operating and controlling a touch-screen display to display various output and receive various input from a user's interaction with the touch-screen display. The computing system 437b can be configured as part of an elevator controller, e.g., elevator controller 115, 215, 315 or even a group controller as described and shown above. The computing system 437b can be a computer or other type of controller that is physically connected or remote from mechanical control of the elevator system. The computing system 437b may be connected to various elements and components within a building that are associated with operation of an elevator system.

As shown, the computing system 437a includes a memory 439a which may store executable instructions and/or data. The executable instructions may be stored or organized in any manner and at any level of abstraction, such as in connection with one or more applications, apps, programs, processes, routines, procedures, methods, etc. As an example, at least a portion of the instructions are shown in FIG. 4A as being associated with a program 441a. The memory 439a can include RAM and/or ROM Flash, EEPROM, and the like and can store the program 441a thereon, wherein the program 441a may be a mobile operating system and/or mobile applications to be used on the user device 431.

Further, the memory 439a may store data 443a. The data 443a may include profile or registration data (e.g., in a user device), a device identifier, or any other type(s) of data. The executable instructions stored in the memory 439a may be executed by one or more processors, such as a processor 445a, which may be a mobile processor in the user device 431. The processor 445a may be operative on the data 443a and/or configured to execute the program 441a. In some embodiments, the executable instructions can be performed using a combination of the processor 445a and remote resources (e.g., data and/or programs stored in the cloud such as remote servers).

The processor 445a may be coupled to one or more input/output (I/O) devices 447a. In some embodiments, the I/O device(s) 447a may include one or more of a physical keyboard or keypad, a touchscreen or touch panel, a display screen, a microphone, a speaker, a mouse, a button, e.g., parts or features of a telephone or mobile device (e.g., a smartphone). For example, the I/O device(s) 447a may be configured to provide an interface to allow a user to interact with the user device 431. In some embodiments, the I/O device(s) 447a may support a graphical user interface (GUI) and/or voice-to-text capabilities for the user device 431.

The components of the computing system 437a may be operably and/or communicably connected by one or more buses. The computing system 437a may further include other features or components as known in the art. For example, the computing system 437a may include one or more communication modules 449a, e.g., transceivers and/or devices configured to receive information or data from sources external to the computing system 437a. In one non-limiting embodiments, the communication modules 449a of the user device 431 can include a near-field communication chip, Bluetooth®, Wi-Fi, and the like and a cellular data chip, as known in the art. In some embodiments, the computing system 437a may be configured to receive information over a network (wired or wireless), such as network 333 shown in FIG. 3. The information received over the network may be stored in the memory 439a (e.g., as data 443a) and/or may be processed and/or employed by one or more programs or applications (e.g., program 441a).

The computing systems 437a may be used to execute or perform embodiments and/or processes described herein, such as within and/or on user devices. For example, the computing system 437a of the user device 431 enables a user interface to enable a user to make service requests to an elevator. To make such service requests, the user device 431, and the computing system 437a thereof, may communicate with the computing system 437b of the elevator controller 415.

For example, as shown in FIG. 4B, the elevator controller 415 includes a computing system 437b that is used to receive commands and/or instructions (e.g., data) from remote devices, including, but not limited to, the user device 431. The computing system 437b is configured to control operation of and/or reservation of elevator cars within one or more elevator hoistways. The computing system 437b (and program 439b stored thereon) may be configured to process requests for elevator service received from one or more user devices (e.g., user device 431). As part of the processing, the computing system 437b may validate or authenticate the user device 437 such that only certain user devices 431 may be able to communicate and/or make elevator service requests to the elevator controller 415.

As shown, the computing system 437b of the elevator controller 415 includes components similar to that shown and described with respect to the computing system 437a of FIG. 4A. As such, the elevator controller computing system 437b includes a memory 439b with at least one program 441b and data 443b stored thereon. The data 443b may include profile or registration data (e.g., related to user devices), elevator car data, elevator control data and/or programs, or any other type(s) of data associated with control and/or operation of an elevator system. A processor 445b may be configured to receive service requests through a communication module 449b from one or more user devices 431. The computing system 437b may further include one or more I/O devices 447b, including, but not limited to, control connections to one or more elevator mechanical controls and/or elevator cars. Further, in some configurations, the I/O devices 447b can include a monitor or display screen as part of a user interactive computing system that is associated with the elevator system and/or elevator controller 415.

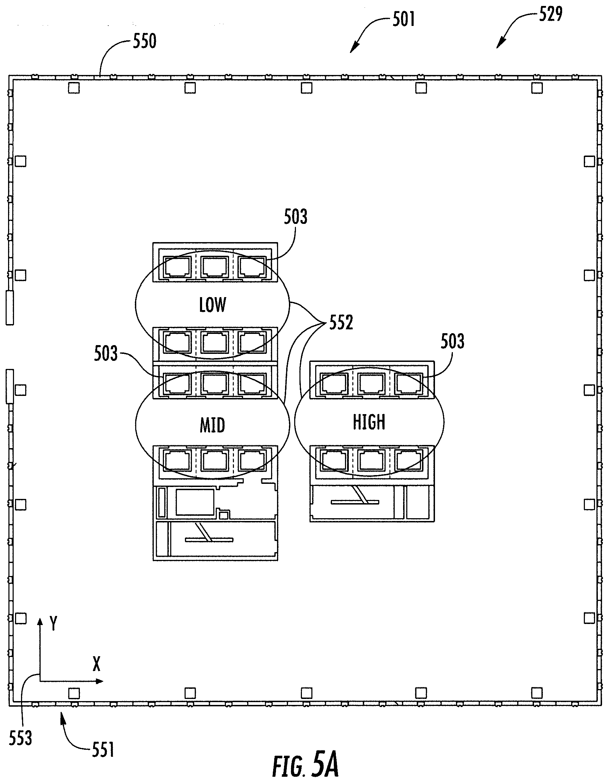

Turning now to FIGS. 5A-5D, depicting various illustrations of a floor plan 550 for a structure or building 529 as may be employed in an embodiment. To implement the methodology described herein various floor plans for the building are obtained. A plan can be obtained in a variety of ways, including the original designs for a building 529, CAD models, any other simplified drawings, even floorplans based on measurements of a serviceman and the like. It is not really significant the origin of the plan, just that it simply include the layout of the particular floor of the building 529 including any structure and features that are relevant to determining the pathways herein. It should also be appreciated that a floor plan is not needed for every floor, just those floors with variations in the locations of the entrances, user interfaces, 531, 532, obstacles, traffic patterns, and the like. For example, each elevator group 552 may have one floor plan layout for the lobby (e.g. with walking entrances at both ends of two or more rows of elevators 503) but then a potentially different floor plan as it goes upwards. For example, with the elevator landing area arranged in a "U" shape with a walking entrance at only one end of the rows of elevator doors. While the elevator hoistways themselves naturally don't move, the arrangements of their entrances (front, rear, both, or none) can vary from floor to floor within the building 529.

In an example building 529, if a single elevator group 552 serves G, 1-10, then there may be one floor plan for G (lobby) and then one other plan for floors 1- 10 (which have a floor plan common layout in the areas near the elevators 503). If there was a second elevator group 552 serving G, 10-20, then there may be a common floor plan a G and at 10, but different floor plans for 1-9 (where only the first group 552 has entrances and the second group 552 does not have any entrances) and for 11-20 (where only the second group has entrances). When there are multiple elevator groups 552 in a building, i.e. where multiple groups 552 serve common areas. This is typically limited to a few floors such as the lobby, sky lobbies, or transfer floors (where one group 552 stops and the next group 552 starts serving, as shown above at floor 10). Therefore, the minimum number of floor plans required is a function of the number of unique floor configurations in the building 529.

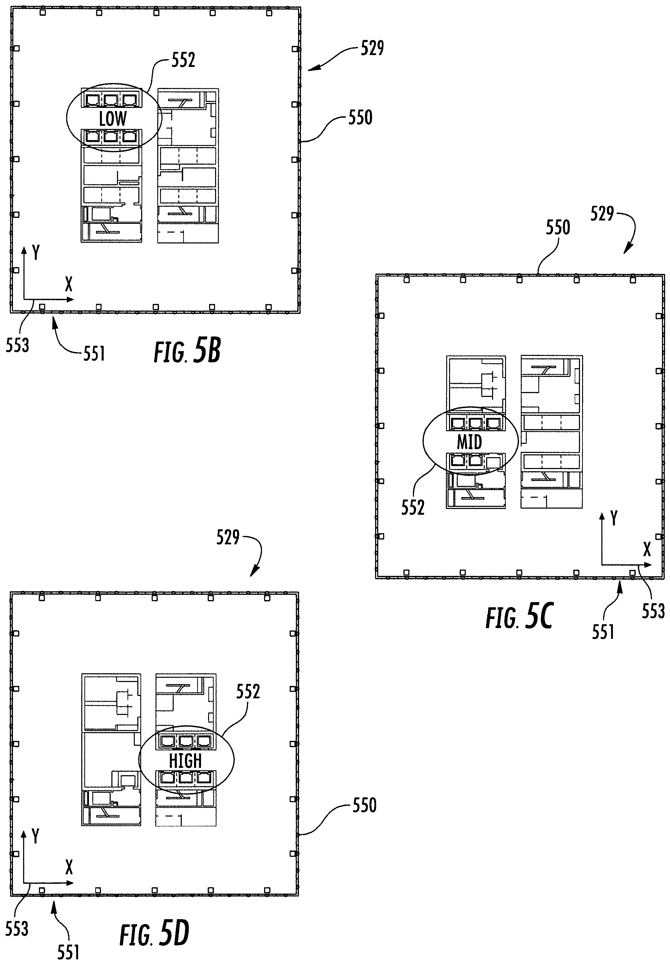

FIG. 5A depicts a conventional building layout 550, for example, at the lobby level, depicting the elevator system 501 divided into operational groups 552 of elevators 503. The groups 552 are typically allocated to different ranges of floors of the building 529. For example, a group 552 each to low, mid, and high rises in the building 529. FIGs. 5B, 5C, & 5D depict a conventional building layout 550, for low, mid, and high rises in the building 529 respectively. Generally floor plans 550 will only be needed for one floor for each grouping of floors. That is, one for the lobby, sky lobby (if it exists) and one floor plan each for each of the groupings 552 of elevators 503 low-rise, mid-rise and high-rise.

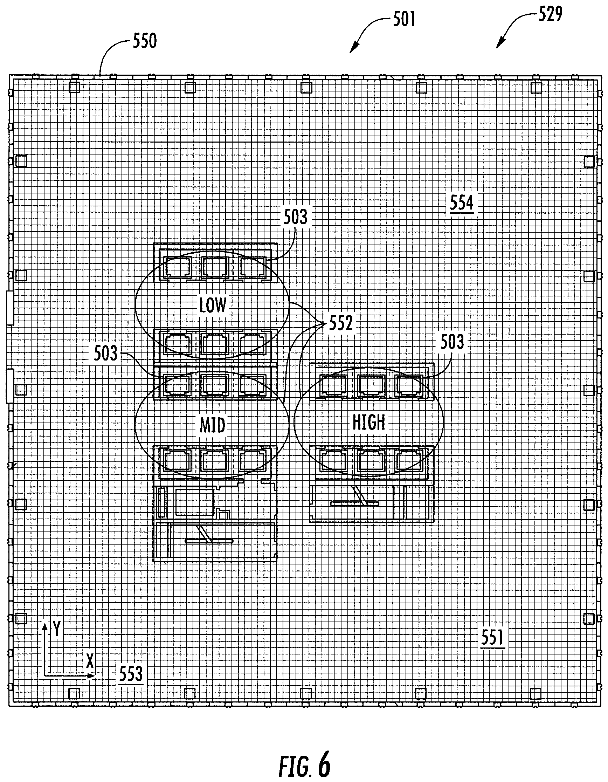

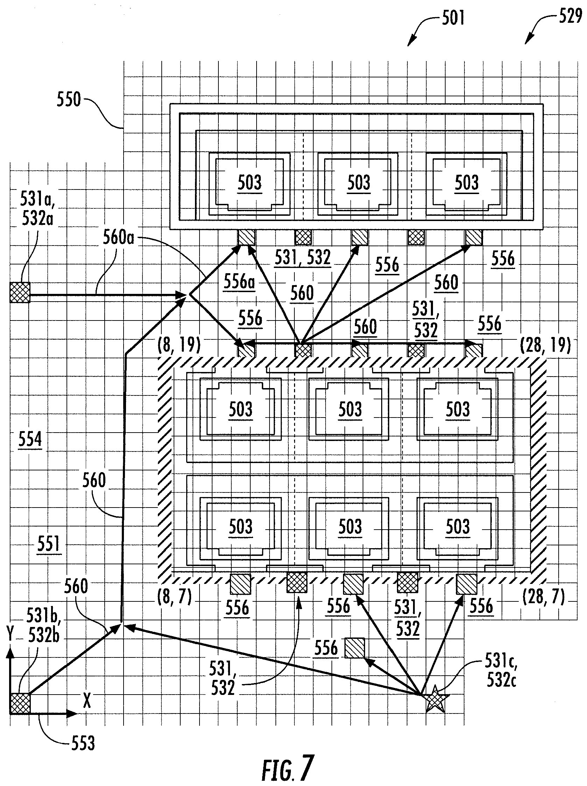

FIG 6 depicts the floor plan 550 of FIG. 5A (for the lobby level) with a measurement system 551 superimposed with the floor plan 550. In an embodiment the measurement system 551 could be simply a grid overlay 554. In another embodiment, the measurement system could be a reference point and a coordinate system 552. It will be appreciated that the measurement system 551 can be any scheme that permits determination of distances on the floor plan 550. In an embodiment a grid overlay 554 is provided for each floor plan 550 for the building 529. The grid overlay 554 will be employed to measure distances between various components of the system such as the user devices 531, 532 and the elevators 503. Turning to FIG. 7 as well, to facilitate the identification and location of the various features on the floor plans 550 a coordinate system 552 may be placed any desired location. In an embodiment a conventional Cartesian coordinate system 553 is employed to facilitate having a reference point to make measurements from. It will be appreciated that other coordinate systems could be employed, for example a polar coordinate system could be employed. As stated earlier, a floor plan 550 with a grid overlay 554 is not required for each floor of a building 529, but only for a typical floor type. Following the example for the floor plans 550 a grid overlay 554 would be used for each floor plan 550, e.g., at the lobby, low-rise, mid-rise and high-rise levels. In this instance, the grid overlay for the other floor levels depicted in FIGs 5B-D are not shown for simplicity.

The grid overlay 554 can be of any suitable size and precision or resolution to provide for moderately accurate placement of the elevators 503, user devices, 531, 532, including fixtures, wall panels, and hall call devices, as well as any other obstacles in the floor plan 550. In an embodiment for a typical building, a grid overlay 554 that provides for distance measurement accuracies on the order of tens of centimeters is sufficient, while accuracy to about 10 centimeters is preferred. However it should be appreciated that grid overlay 554 sizes yielding higher or lower accuracies may also be sufficient depending on the given floor plan 550. For example, in a floor plan 550 with few obstacles or constraints, accuracies on the order of a meter may still be sufficient as the distance to be computed from a user device 531, 532 e.g., a destination entry fixture or to any elevator, may always be a straight line. Therefore, it will be appreciated that the selection of the appropriate sized grid overlay 554 may be a function of numerous factors and need only be accurate enough to ensure that the calculated distance and time from a user device to a selected elevator is within an acceptable tolerance. It should also be appreciated that the selected grid need not be the same for each floor in a building or structure 529. Larger grid overlays 554 have the advantage of requiring less data and data storage, while finer, smaller grid overlays will yield more accuracy in distance and time measurement while requiring more processing and storage for the larger amounts of data to be saved and stored with the floor plan 550 of the building or structure 529.

Once a suitable grid overlay 554 has been established for each floor plan 550, the key features, obstacles, and user interfaces 531 are identified along with their locations in the grid overlay 554 on the floorplan 550. For example, as depicted in FIG. 7, the elevators shafts in structure 529 (cross hatched in the figure) and obstacles are identified as areas on the grid layout 554 where a user cannot walk or where a pathway would in some way be obstructed. It will be appreciated that each of the features, obstacles, and user interfaces can be identified in the grid overlay 554 for the floor plan based not only on their position in the coordinate system 553, but may be defined as a region. For example, the obstructions and elevator shafts in the structure may be identified as a set of coordinate points, the area within being identified as an area where the user can't walk. For example as depicted in the FIG. 7 the corners of the bank of elevator shafts surrounded by the cross hatching could also be defined by the four coordinates of the corners, i.e., coordinate points (8,7), (8,19), (28,19), and ((28,7).

Likewise, the locations of each of the user interfaces 531, 532 are identified. In an embodiment, some user interfaces are physically located at the elevators e.g., hall call buttons, in other instances, the user interfaces may be a fixture or a mobile device located some distance from the elevators. Moreover, a location target area 556 in front of each of the elevators 503 is identified. The target area 556 represents a location a user would be expected to walk if they are assigned to a specific elevator 503 in an elevator group 552. In an embodiment, the target area 556 is simply depicted as the position centered in front of the elevator cars 503, however other locations are possible. In fact it may be desirable to define the target area as a spot some distance from the doors of the elevator 503. For example users typically do not congregate right in front of a door to an elevator 503 but some distance back to ensure that any passengers on the elevator have sufficient room to depart the elevator car 503.

Continuing with FIG. 7, once each of the features, obstacles, target areas, 556 and the like associated with a given floor in the building 529 have been identified on the grid layout 554 of the floor plan 550, then the nominal pathways 560 and walk distances and durations may be computed. With the grid layout 554 as depicted in the figures, conventional geometric and arithmetic techniques may be employed to compute the straight line distances for each pathway 560 from each of the user devices 531, 532 to the target desired target area 556 while ensuring any obstructed or prohibited areas or coordinates are avoided. For example, for pathway 560a from user device 531a to target area 556a. In this instance the units of the grid along the pathway are summed for pathways 560 that traverse the grad at an angle, geometric techniques such as Pythagorean theorem may be employed to compute the distance. In this example approximately eight grid units horizontally on the grid layout 554, and approximately 5 units in length along the angled portion (about 4 units laterally and 3 vertically). The total number of the units of the grid layout multiplied by the size of a grid unit provides the distance. Pathways can be defined as straight paths with simple corners only. Pathways 560 can also be the shortest distance including straight pathway segments only, for example just straight segments pieced together. Pathways can also be the shortest distance including at least one curved pathway segment. The curve could be defined in any conventional mathematical means. It should be appreciated that while it would be most common to utilize pathways 560 are the shortest possible, that need not necessarily be the case. Pathways 560 may be defined longer to address other constraints, traffic patterns, congestion of users and the like. To estimate the time duration, the elevator system 101 employs some standard average walking speeds of approximately 1.2 meters per second. However it should be understood that other speeds may be employed, for example to address users with limited mobility. It should be further appreciated that each of the pathways 560 may or may not be computed in advance, they may even be computed as needed.

To add or replace a fixture or user device 531, 532, its location on the floor plan in simple (X, Y, Z (the particular floor or floor type)) coordinates need only be specified, as well as its orientation relative to the (X, Y) axes or some other reference point. Once the floor (Z) is known, the relevant floor plan 550 can be sent to a mobile device or to the fixture 531, 532 itself in order to allow the installer to graphically select the (X, Y) coordinates and orientation. Advantageously this facilitates movement and or installation of user devices 531, 531 when compared to existing systems, where measurement of distances and selecting of directions for computing paths and durations of travel to each elevator car 203. For example, if a new fixture 531c, 532c is being placed where the star is located. The coordinates and orientation for the new location may be specified to ensure that the new pathways and associated durations are readily and accurately computed.

Likewise when the user device 531, 532 is a mobile device the solution is more difficult because the location of a mobile user device 531, 532 on the floor plan 550 varies as the user moves about the building 529. As a result, fixed (X, Y, Z) coordinates cannot readily be specified ahead of time. In this instance, the distances to each possible elevator 503 or target area 556 are calculated in real time based on the location of the mobile user device 531, 532 may be determined using conventional techniques such as GPS, Bluetooth® beacons, WiFi® or wireless signal strength, and the like. Once the floor (Z) is known, the relevant floor plan 550 can be sent to a mobile user device 531, 532 itself in order to facilitate calculating the pathways 560. The (X, Y) coordinates on the floor plan can be employed to compute the pathways 560. Direction can be inferred and estimated based on successive measurements and/or on last known walking direction of the mobile device user. In an embodiment, the distances and directions to each elevator may be calculated on the user's device 531, 532. In another embodiment they may be calculated by the elevator controller(s) 115, 215, 315 or even an elevator group controller (not shown) This would be beneficial, in that the software on the user device 531, 532 isn't more complex that it needs to be, and so that just one set of data (the device's coordinates and orientation) are all that needs to be communicated to the elevator group controller(s) rather than a whole set of distances and directions to each elevator. In another embodiment, the functionality could be shared so that the user device does the route-finding after the elevator assignment is communicated to it.

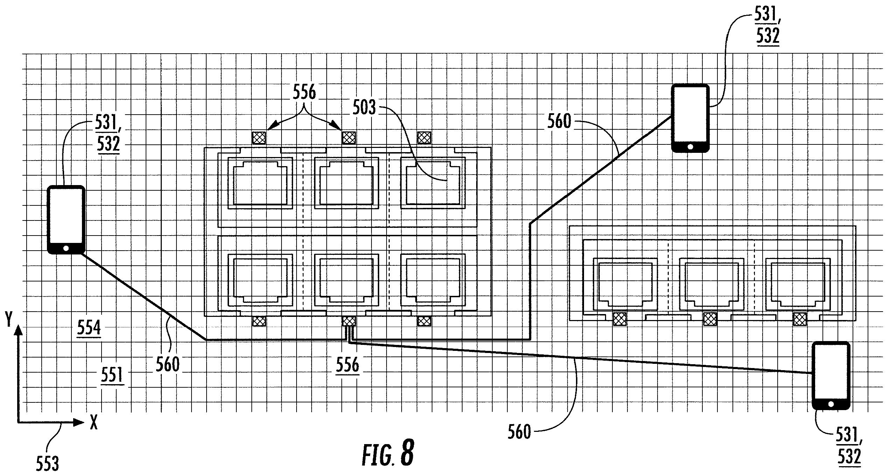

FIG 8 depicts an example of a mobile user device 531, 532 and various computed pathways 560 to a particular target area 556. Possible routes for three different starting locations to a single elevator or target area 556 are shown. In an embodiment, a simplified map could be transmitted to the mobile user device 531, 531 to assist a user in finding their way to their assigned elevator.

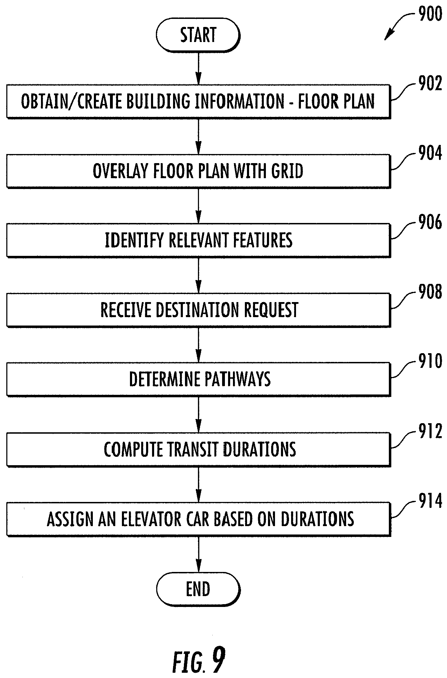

Turning now to FIG. 9, a flow process 900 in accordance with an embodiment of the present disclosure is shown. Flow process 900 may incorporate additional or alternative steps without departing from the scope of the present disclosure. The flow process 900 may be performed by a processor on a user device (e.g., as described above) with various related applications and/or data stored in a memory of the user device.

At process block 902, building information associated with the structure or building 529 is obtained. The floor plan 550 information can be actual design drawings depicting the building layout or even simplified drawings. The floor plan 550 could even be a simple measurement model with data collected by user, operator mechanic and the like. For example, a serviceperson could measure simple floor dimensions during the commissioning of a building or structure 529. The building information can include information regarding one or more elevator systems 101 located within the building, any obstacles or fixed constraints on the floor plan 550.

At process block 904, the grid overlay 554 is added to the floor plan 550. In an embodiment the grid overlay 554 may include a coordinate system 552 to facilitate the identification and location of the various features on the floor plans 550. The coordinate system 553 may be placed any desired location. Continuing with process block 906, the key features, obstacles, and user interfaces 531, 532 are identified along with their locations in the grid overlay 554 on the floorplan 550. In an embodiment, the elevators shafts in structure 529 and obstacles are identified as areas on the grid layout 554 where a user cannot walk. In addition, the locations for the user interfaces 531, 532 and target areas 556 are identified.

At process step 908 the system receives a destination request from a user via a user device 531, 532. Finally, based on the computed duration for the user to transit to the elevator, an elevator is assigned to the user as depicted at process block 912. Once the features and obstacles are identified, the various pathways are from a user device 531, 532 to each elevator opening/target area 556 are identified and computed as depicted at process block 910. This process step can be computed a priori, or at the time the location of a user device 531, 532 is ascertained, particularly for a fixed device 531, 532. For example, when the user device is a mobile device. At block 912 the walking durations are computed for the pathway 560. The durations can also be computed a priori or at runtime as needed. In an embodiment the durations are computed real time for applications with a mobile user device 531, 532. Finally, as depicted at process step 914, an elevator car is assigned to the user and user. It should be appreciated that the walk duration is just one factor to consider before making an elevator car assignment. The elevator assignment process takes into account numerous other factors for a group of elevators. For example, the position/location of each of the elevator cars, currently assigned calls, operating mode, authorized floors a passenger may access (due to security restrictions), number of passengers in the elevator car (current or future based on assigned calls), etc..

Aspects of the disclosure may be used in connection larger campuses, and enterprises. For example, floor plans could be extended to a campus with multiple buildings. In addition, a user could employ a mobile device, where the particular campus and/or building is selected, and then the destination request is entered. The pathways 560 and durations could then be computed automatically.

Another feature of the described embodiments that a user could employ is that facilities/tenants in a building or campus could be selected as destinations directly from map displayed on fixtures or mobile devices 531. In such an instance, the elevator assignments may be identified, and the pathways 560 and durations computed automatically. Moreover, with the building floorplan 550 as part of the elevator system, simplified floor plans could be downloaded to mobile devices 531 to help passengers to find their way within the building, e.g. to a cafeteria or meeting room and the like.

Another important aspect of this disclosure may be used for passengers with special needs, disabilities, e.g. audio navigation assistance for visually impaired users, and the like where the standard walking times and paces do not apply. A user could identify as having limited mobility for example, and additional timing associated with the travel to the elevator could be allocated. In addition, as described above, a simplified floor plan or directions could be provided to the user on their mobile user device 531 to assist in directing the user to the appropriate target area 556.

Aspects of the disclosure may be used in connection with one or more data mining applications. For example, patterns of elevator usage may be analyzed to suggest alternative times that users could consume elevator resources. Advertising opportunities may be available. For example, if a user profile indicates that the user likes to drink coffee, coupons for free coffee may be provided to the user as an incentive to utilize the elevator during off-peak times or periods.

As described herein, in some embodiments various functions or acts may take place at a given location and/or in connection with the operation of one or more apparatuses, systems, or devices. For example, in some embodiments, a portion of a given function or act may be performed at a first device or location (e.g., user device), and the remainder of the function or act may be performed at one or more additional devices or locations (e.g., elevator controller). Further, embodiments described herein may be implemented using one or more technologies. In some embodiments, an apparatus or system may include one or more processors and memory storing instructions that, when executed by the one or more processors, cause the apparatus or system to perform one or more methodological acts as described herein. Various components known to those of skill in the art may be employed without departing from the scope of the present disclosure.

Embodiments may be implemented as one or more apparatuses, systems, and/or methods. In some embodiments, instructions may be stored on one or more computer program products or computer-readable media, such as a transitory and/or non-transitory computer-readable medium. The instructions, when executed, may cause an entity (e.g., an apparatus or system) to perform one or more methodological acts as described herein.

Aspects of the disclosure have been described in terms of illustrative embodiments thereof. Numerous other embodiments, modifications and variations within the scope and spirit of the appended claims will occur to persons of ordinary skill in the art from a review of this disclosure. For example, one of ordinary skill in the art will appreciate that the steps described in conjunction with the illustrative figures may be performed in other than the recited order, and that one or more steps illustrated may be optional.

The use of the terms "a", "an", "the", and similar references in the context of description (especially in the context of the following claims) are to be construed to cover both the singular and the plural, unless otherwise indicated herein or specifically contradicted by context. The modifier "about" used in connection with a quantity is inclusive of the stated value and has the meaning dictated by the context (e.g., it includes the degree of error associated with measurement of the particular quantity). All ranges disclosed herein are inclusive of the endpoints, and the endpoints are independently combinable with each other.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments.

## Claims

1. A method for making elevator service requests in a building, the method comprising:
obtaining a floor plan for the building;
overlaying a measurement system of suitable scale onto the floor plan;
identifying relevant features and their location in the floor plan based on the measurement system;
determining a pathway from a user device to a target area in the vicinity of an elevator door based on the relevant features;
computing a travel duration from the user device to the target area;
assigning an elevator car to a user based on a user service request at the user device and the travel duration.

2. The method of claim 1, wherein the measurement system includes at least one of a grid overlay, a coordinate system on a grid overlay.

3. The method of claim 2, wherein the coordinate system is at least one of a Cartesian coordinate system and a polar coordinate system.

4. The method of any of claims 1 to 3, wherein the relevant features include at least one of the user device, the elevator, the target area in the vicinity of the elevator, and any obstacles.

5. The method of any of claims 1 to 4, wherein the user device is at least one of a fixture, a kiosk, a turnstile, and a user's mobile device.

6. The method of claim 5, wherein the obstacles include at least one of: any feature in the building that could impede a user traversing a pathway to the target area; a shaft for the elevator, any building structure.

7. The method of claim 5 or 6, wherein the obstacles are defined as regions on a coordinate system.

8. The method of any of claims 1 to 7, wherein the pathway is a computed distance from the user device to the target area avoiding any obstacles.

9. The method of claim 8, wherein the computed distance is based on at least one of: straight pathways with right angle turns only, a shortest distance including straight pathway segments only, and a shortest distance including at least one curved pathway segment.

10. The method of any of claims 1 to 9, wherein the duration is an estimated time for the user to traverse the distance from the user device to the target area.

11. The method of any of claims 1 to 10, further including transmitting to a user device at least one of the floor plan, a simplified floor plan or directions regarding a pathway to a target area.

12. The method of any of claims 1 to 11, wherein the floor plan includes at least one of a drawing, a design model, CAD drawings and a plan based on measurements.

13. The method of any of claims 1 to 12, wherein the measurement system includes a coordinate system, and wherein the coordinate system is at least one of a Cartesian coordinate system and a polar coordinate system.

14. The method of any of claims 1 to 13, further including:
obtaining a second floor plan for a second floor in the building;
overlaying a second measurement system of suitable scale onto the second floor plan;
identifying relevant features and their location on the second floor in the second floor plan based on the second measurement system;
determining a pathway from a second user device on the second floor to a target area in the vicinity of an elevator door on the second floor based on the relevant features on the second floor;
computing a travel duration from the second user device to the target area on the second floor;
assigning an elevator car to a user based on a user service request at the second user device and the travel duration.

15. An elevator system for making elevator service requests, the system comprising:
at least one processor;
a display; and
memory having instructions stored thereon that, when executed by the at least one processor, cause the processor to carry out steps according to the method of any of claims 1 to 14.
